# EUROPEAN PATENT APPLICATION

(11) **EP 4 576 238 A1**
(43) Date of publication of application: **25.06.2025**
(21) Application number: 24819501.8
(22) Date of filing: 13.05.2024
(51) Int. Cl.: H01M 4/04, B26D 1/157, B26D 7/18

(54) **ELECTRODE MANUFACTURING DEVICE**

(30) Priority: 08.06.2023 KR 20230073808
(71) Applicant: LG Energy Solution, Ltd., Seoul 07335 (KR)
(72) Inventor: HAN, Yoon-ju, Daejeon 34122 (KR); AHN, Byoung-Hoon, Daejeon 34122 (KR)
(74) Representative: Goddar, Heinz J.
(86) International application number: PCT/KR2024/006500
(87) International publication number: WO 2024/253349

(57) **Abstract**

Disclosed is an electrode manufacturing apparatus, which includes a slitting roll containing a knife for cutting an electrode; and at least one bracket located downstream in a movement direction of an electrode spaced apart from the slitting roll by a predetermined distance and having a plurality of micro holes provided at a position facing the electrode, the bracket being configured to remove foreign matter generated as a result of cutting the electrode on the slitting roll through the micro holes.

## Description

### TECHNICAL FIELD

The present disclosure relates to an electrode manufacturing apparatus. More specifically, the present disclosure relates to a slitting device in the electrode manufacturing apparatus.

The present application claims priority to Korean Patent Application No. 10-2023-0073808 filed on June 8, 2023 in the Republic of Korea, the disclosures of which are incorporated herein by reference.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, in the process of manufacturing the secondary battery, the electrode may be cut. At this time, as the electrode is cut, foreign matter such as powder of the foil that makes up the electrode or electrode powder may be generated. As a result, foreign matter such as powder may scatter and stick to the electrode surface, contaminating the electrode. The electrode powder and foil powder settled on the electrode surface may cause performance degradation and safety issues after the battery is completed.

### DISCLOSURE

### Technical Problem

The present disclosure is directed to smoothly removing foreign matter generated when cutting an electrode while a secondary battery is being manufactured.

However, technical problems to be solved by the present disclosure are not limited to the above-described problems, and other problems not mentioned herein may be clearly understood by those skilled in the art from the following description of the present disclosure.

### Technical Solution

In one aspect of the present disclosure, there is provided an electrode manufacturing apparatus, comprising: a slitting roll containing a knife for cutting an electrode; and at least one bracket located downstream in a movement direction of an electrode spaced apart from the slitting roll by a predetermined distance and having a plurality of micro holes provided at a position facing the electrode, the bracket being configured to remove foreign matter generated as a result of cutting the electrode on the slitting roll through the micro holes.

Preferably, the micro holes may include blow holes configured to discharges air; and suction holes configured to inhale air.

In another aspect of the present disclosure, electrode manufacturing apparatus may further comprise an air injector connected to the blow hole through a pipe to discharge air; and an air inhaler connected to the suction hole through a pipe to inhale air.

In another aspect of the present disclosure, the bracket may include an upper bracket located above the electrode; and a lower bracket located below the electrode.

Preferably, a micro hole of the lower bracket provided at a position facing a micro hole of the upper bracket may be the same type of micro hole as the micro hole provided in the upper bracket.

In another aspect of the present disclosure, the blow holes and the suction holes may be arranged by turns.

Preferably, the blow holes and the suction holes may be arranged in a tile pattern.

In another aspect of the present disclosure, the blow holes may be arranged in a straight line, and the suction holes may be arranged in a straight line.

Preferably, the arrangement line of the blow holes and the arrangement line of the suction holes may be arranged by turns.

In another aspect of the present disclosure, the arrangement line of the blow holes and the arrangement line of the suction holes may be perpendicular to the movement direction of the electrode.

In another aspect of the present disclosure, the arrangement line of the blow holes and the arrangement line of the suction holes may be parallel to the movement direction of the electrode.

In another aspect of the present disclosure, the arrangement line of the suction holes may be provided at a position corresponding to an electrode line cut by the knife provided to the slitting roll.

In another aspect of the present disclosure, the electrode manufacturing apparatus may include a plurality of brackets.

In another aspect of the present disclosure, electrode manufacturing apparatus may include a frame for mounting and fixing the bracket.

In another aspect of the present disclosure, the electrode manufacturing apparatus may include a filtration device connected to the air inhaler to filter and separate foreign matter.

### Advantageous Effects

According to the present disclosure, while the secondary battery is being manufactured, foreign matter generated when cutting the electrode may be smoothly removed.

However, effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for explaining an electrode manufacturing apparatus according to an embodiment of the present disclosure.
FIG. 2 is a diagram for explaining a slitting roll included in the electrode manufacturing apparatus of FIG. 1.
FIG. 3 is a drawing for explaining a conventional electrode manufacturing device.
FIG. 4 is a drawing for explaining another type of the conventional electrode manufacturing device.
FIG. 5 is a side view showing the electrode manufacturing apparatus of FIG. 1.
FIG. 6 is a diagram for explaining a bracket included in the electrode manufacturing apparatus of FIG. 1.
FIG. 7 is a side view showing the bracket of FIG. 6.
FIG. 8 is a drawing for explaining a bracket according to another embodiment of the present disclosure.
FIG. 9 is a drawing for explaining a bracket according to still another embodiment of the present disclosure.
FIG. 10 is a diagram for explaining an electrode manufacturing apparatus including the bracket of FIG. 9.
FIG. 11 is a drawing for explaining an electrode manufacturing apparatus according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, to aid understanding of the present disclosure, the attached drawings are not drawn to scale and the dimensions of some components may be exaggerated.

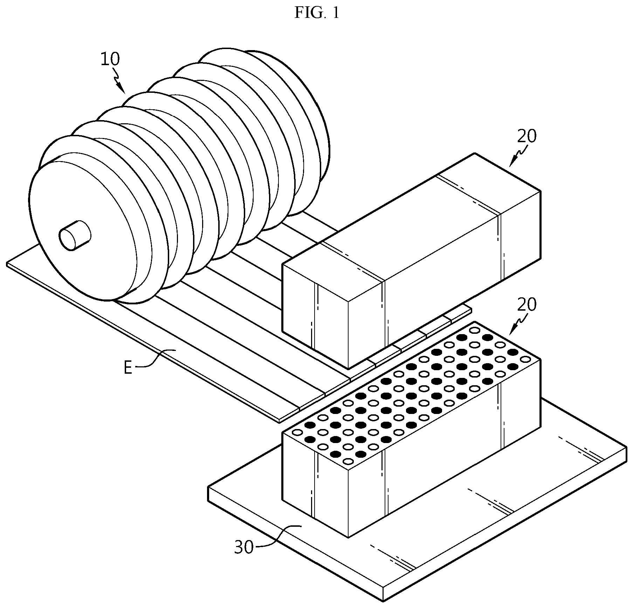

FIG. 1 is a diagram for explaining an electrode manufacturing apparatus 1 according to an embodiment of the present disclosure.

Referring to FIG. 1, the electrode manufacturing apparatus 1 according to an embodiment of the present disclosure includes a slitting roll 10 and at least one bracket 20. The electrode manufacturing apparatus 1 may further include a frame 30 and/or a filtration device.

The slitting roll 10 and the bracket 20 may be devices included in the slitting process during the electrode manufacturing process. For example, the electrode manufacturing process may include a mixing process that measures and mixes active materials required to manufacture a positive electrode and a negative electrode, a coating process that applies the mixed active materials onto an electrode E, and a roll pressing process that passes the coated electrode E between rolling rolls, and a slitting process that cuts the rolled electrode E according to the battery size. The electrode manufacturing process may further include, for example, an electrode E drying process. Here, the slitting roll 10 and the bracket 20 may be included in the slitting process among the plurality of processes.

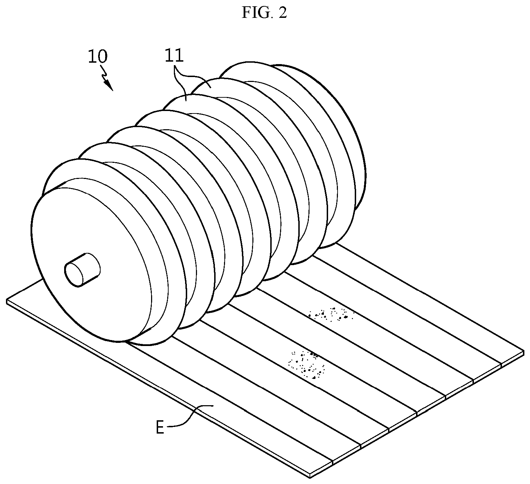

FIG. 2 is a diagram for explaining a slitting roll 10 included in the electrode manufacturing apparatus 1 of FIG. 1.

Referring to FIG. 2, the slitting roll 10 may be configured to have an approximately cylindrical shape. At this time, the longitudinal axis of the cylinder may be perpendicular to the movement direction of the electrode E. That is, the side surface of the cylindrical slitting roll 10 may be arranged to face the electrode E.

The slitting roll 10 may include at least one knife 11 for cutting the electrode E. In particular, the slitting roll 10 may include at least one knife 11 provided on the side surface thereof to cut the electrode E. For example, the knife 11 may be configured to surround the side surface of the slitting roll 10. That is, the central axis of the knife 11 and the central axis of the slitting roll 10 may be the same. Here, the knife 11 may be disposed parallel to the movement direction of the electrode E. Accordingly, the electrode E may be cut along a line parallel to the movement direction.

The slitting roll 10 may include a plurality of knives 11. At this time, the spacing between the knives 11 may vary depending on the size specifications of a specific battery. Additionally, the knife 11 may be configured to be replaceable. For example, if the knife 11 is used for a long period of time, the blade may wear out. At this time, the worn blade may be replaced with an unworn blade.

The slitting roll 10 may be provided on one side of the electrode E. In this case, a plate capable of supporting the knife 11 and the electrode E may be provided on the opposite side of the slitting roll 10. Accordingly, the electrode E interposed between the knife 11 provided on the slitting roll 10 and the plate may be smoothly cut.

In another embodiment, the slitting roll 10 may be provided on both sides of the electrode E. When the slitting roll 10 is provided on both sides of the electrode E, the knife 11 provided on each slitting roll 10 may be provided at the same position. Accordingly, the electrode E interposed between the knives 11 may be smoothly cut.

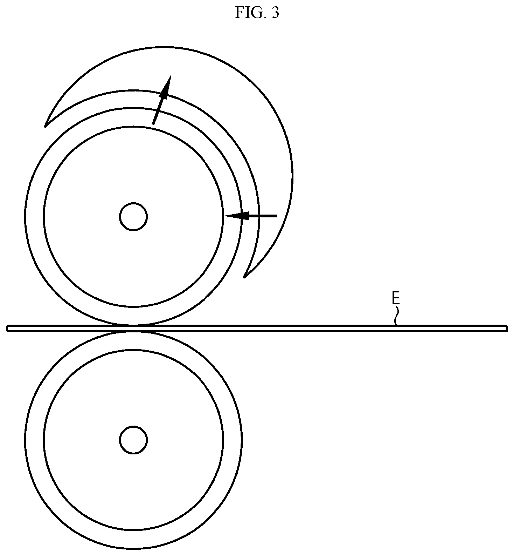

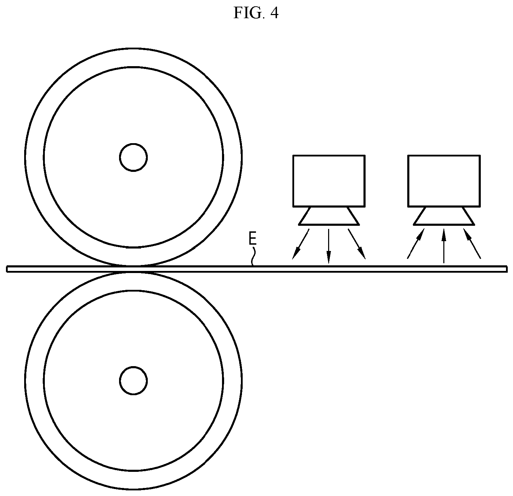

Meanwhile, the electrode E may be cut by the knife 11 as described above. At this time, as the electrode E is cut, foreign matter such as powder of the foil that makes up the electrode E or electrode powder may be generated. As a result, foreign matter such as powder may scatter and stick to the surface of the electrode E and contaminate the electrode E. In this way, electrode powder and foil powder settled on the surface of the electrode E may cause performance degradation and safety problems after the battery is completed. This will be described in detail below with reference to FIGS. 3 and 4 for explaining the conventional electrode manufacturing device 1.

FIG. 3 is a drawing for explaining a conventional electrode manufacturing device, and FIG. 4 is a drawing for explaining another type of the conventional electrode manufacturing device.

Referring to FIG. 3, the conventional electrode manufacturing device includes a slitting roll, and the slitting roll includes knives disposed around the slitting roll. The conventional electrode manufacturing device includes a bracket that surrounds a part of the knife at a position facing the knife. A suction device and a blow device, which are components for discharging foreign matter, are provided on the bracket. According to this structure, air is discharged from the blow device to move the foreign matter, and the moved foreign matter is sucked through the suction device so that the foreign matter is removed. However, according to this structure, since the bracket is disposed adjacent to the knife, foreign matter stuck on the knife may be removed, but it is difficult to remove foreign matter that has scattered and settled on the electrode E.

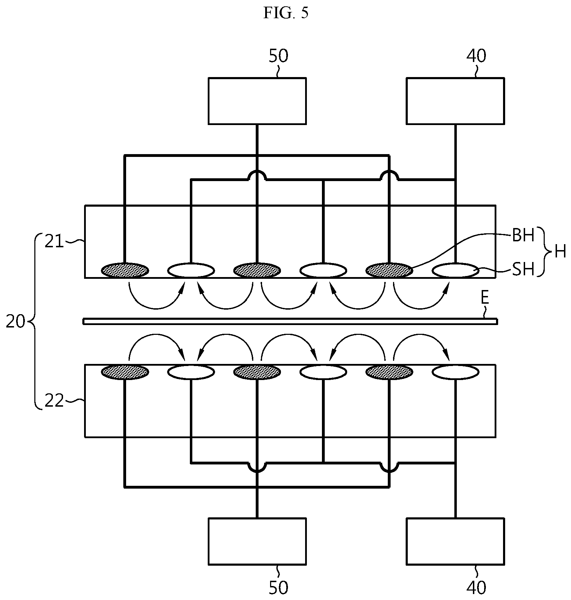

Referring to FIG. 4, another conventional electrode manufacturing apparatus includes a slitting roll having a knife, and includes a suction device and a blow device located downstream in the movement direction of the electrode E and spaced apart from the slitting roll by a predetermined distance. More specifically, along the movement direction of the electrode E, the slitting roll, the blow device, and the suction device are arranged in that order. According to this structure, foreign matter generated at the cut site of the electrode E may first be scattered by the blow device and then removed by the suction device. However, according to this structure, since the blow device and the suction device are located on the same side with respect to the electrode E and are spaced by a predetermined distance apart from each other, electrode tremor may occur. That is, as shown in FIG. 4, since the blow device applies downward pressure to the electrode E and the suction device pulls the electrode E upward, there is a possibility that the electrode E is bent into a lying S shape. Accordingly, the inventor of the present disclosure has derived an electrode manufacturing apparatus to solve all the problems, which will be described in detail with reference to FIGS. 5 to 11 below.

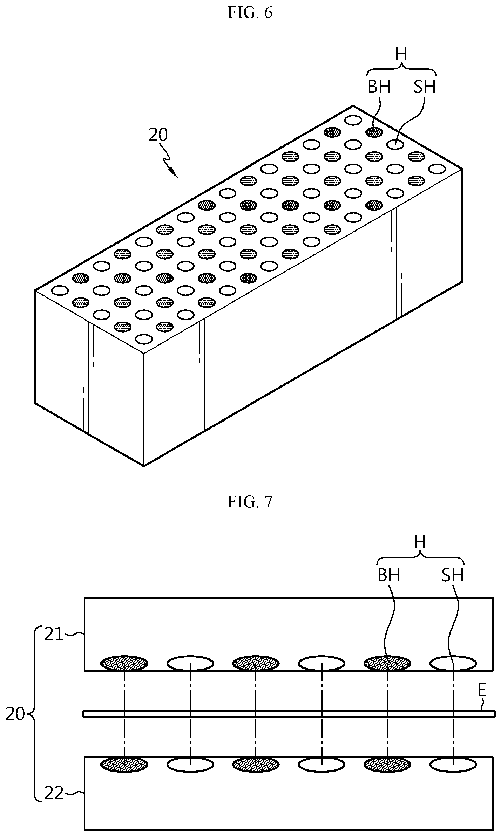

FIG. 5 is a side view showing the electrode manufacturing apparatus 1 of FIG. 1, and FIG. 6 is a diagram for explaining a bracket 20 included in the electrode manufacturing apparatus 1 of FIG. 1.

Referring again to FIG. 1, the bracket 20 may be located downstream in the movement direction of the electrode E that is spaced apart from the slitting roll 10 by a predetermined distance. Referring to FIG. 1, the electrode E may enter the bracket 20 after passing the slitting roll 10. In other words, the electrode E may enter the bracket 20 after being cut at the slitting roll 10.

Referring to FIGS. 5 and 6, the bracket 20 may include a plurality of micro holes H. The plurality of micro holes H may be arranged to be spaced apart from each other by a predetermined distance. For example, as shown in FIG. 6, the gap between the plurality of micro holes H may be very small. For example, referring to FIG. 1, the gap between one micro hole H and an adjacent micro hole H may be smaller than the gap between one knife 11 and an adjacent knife 11.

At this time, the foreign matter generated as a result of cutting the electrode E in the slitting roll 10 may be removed through the micro hole H. In other words, the bracket 20 may remove foreign matter stuck on the electrode E that passes through the bracket 20.

In this way, according to the structure in which the electrode E passes through the bracket 20, not only foreign matter stuck to the knife 11 but also foreign matter stuck to the electrode E itself may be effectively removed. In addition, according to this structure in which the bracket 20 has a plurality of micro holes H, a minute air flow is formed between the electrode E and the bracket 20, thereby preventing electrode tremors. That is, as shown in FIG. 5, a minute air layer is formed in the area adjacent to the electrode E, thereby preventing the electrode E from sagging or bending. As a result, wrinkles that may appear on the electrode E may be smoothed out. In addition, the above structure may be advantageous in removing foreign matter, since the bracket 20 covers the electrode E.

Referring to FIG. 5 again, the micro hole H may include a blow hole BH that discharges air, and a suction hole SH that sucks air.

The blow hole BH may discharge air to scatter foreign matter. Preferably, the blow hole BH may guide foreign matter toward the suction hole SH. The suction hole SH may absorb the scattered foreign matter. The micro hole H may be a blow hole BH or a suction hole SH. However, the case where all micro holes H are the blow hole BH or all micro holes H are the suction hole SH may be excluded from the scope of the present disclosure. Preferably, the micro holes H included in the bracket 20 of the present disclosure may include both the blow hole BH and the suction hole SH.

In this way, according to the structure of the bracket 20, which includes both the blow hole BH and the suction hole SH, the distance between the blow hole BH and the suction hole SH is reduced, so that a minute air flow may be formed. Accordingly, electrode tremor may be prevented. That is, as shown in FIG. 5, since a minute air layer is formed in the area adjacent to the electrode E, it is possible to prevent the electrode E from sagging or bending. As a result, wrinkles that may appear on the electrode E may be smoothed out.

In one aspect of the present disclosure, referring to FIG. 5, the electrode manufacturing apparatus 1 may include an air injector 50 connected to the blow hole BH through a pipe to discharge air; and an air inhaler 40 connected to the suction hole SH through a pipe to inhale air.

For example, the air injector 50 and/or the air inhaler 40 may include an air pump and/or an air presser. The air injector 50 and/or the air inhaler 40 may be connected to bracket 20. For example, the air injector 50 may be connected to the blow hole BH provided in the bracket 20 through a pipe, so that air may be discharged through the blow hole BH. Meanwhile, the air inhaler 40 may be connected to the suction hole SH provided in the bracket 20 through a pipe, so that air may be sucked in through the suction hole SH.

In another aspect of the present disclosure, the bracket 20 may include an upper bracket 21 located above the electrode E, and a lower bracket 22 located below the electrode E.

For example, referring to FIGS. 1 and 5, the electrode manufacturing apparatus 1 may include an upper bracket 21 located above the electrode E and a lower bracket 22 located below the electrode E. The separation distance between the upper bracket 21 and the electrode E may be approximately equal to the separation distance between the lower bracket 22 and the electrode E.

According to this structure, foreign matter may be simultaneously suctioned and removed from the upper and lower parts of the electrode E. For example, in an embodiment in which the slitting roll 10 is provided on both sides of the electrode E, there is a high possibility that foreign matter such as electrode powder and foil powder generated at the cut site of the electrode E will occur on both sides of the electrode E. Alternatively, even in an embodiment in which the slitting roll 10 is provided on one side of the electrode E, foreign matter such as fine electrode powder and foil powder may flow to the side opposite to the knife 11. At this time, according to an embodiment in which the upper bracket 21 and the lower bracket 22 are provided simultaneously, foreign matter stuck to both sides of the electrode E may be smoothly removed.

FIG. 7 is a side view showing the bracket 20 of FIG. 6.

In another aspect of the present disclosure, the micro hole H of the lower bracket 22 provided at a position facing the micro hole H of the upper bracket 21 may be the same type of micro hole H as the micro hole H provided in the upper bracket 21.

For example, referring to FIG. 7, the micro hole H of the upper bracket 21 includes both the blow hole BH and the suction hole SH, and the micro hole H of the lower bracket 22 also includes both the blow hole BH and the suction hole SH. At this time, the micro hole H provided at the leftmost side of the upper bracket 21 on the drawing may be the blow hole BH, and the micro hole H of the lower bracket 22 provided at a position corresponding to the blow hole BH may also be the blow hole BH. In addition, the micro hole H located at the second position from the left side of the upper bracket 21 on the drawing may be the suction hole SH, and the micro hole H of the lower bracket 22 provided at a position corresponding to the suction hole SH may also be the suction hole SH. That is, in the above embodiment, regardless of the order in which the micro holes H are arranged within the bracket 20 of either the upper bracket 21 or the lower bracket 22, the same type of micro holes H may be provided at corresponding positions of the upper bracket 21 and the lower bracket 22.

According to this structure, the upward and downward forces applied to the electrode E at a specific point of the electrode E may offset each other, thereby preventing the electrode E from bending or shaking. For example, if the suction hole SH is provided at a specific position in the upper bracket 21 and the blow hole BH is provided at a corresponding position in the lower bracket 22, unlike the present disclosure, the electrode E interposed therebetween may receive a force pulling upward by the suction hole SH of the bracket 21 and may receive a force pushing upward by the blow hole BH of the lower bracket 22. Accordingly, the electrode E is more likely to bend upward at the specific point. If the micro hole H of the upper bracket 21 located right next to the specific position is the blow hole BH and the micro hole H of the lower bracket 22 provided at the corresponding position is the suction hole SH, the electrode E interposed at this point receives a downward force by the blow hole BH of the upper bracket 21 and receives a force pulled downward by the suction hole SH of the lower bracket 22. Accordingly, the electrode E is more likely to bend downward at the point. Ultimately, the electrode E is pressured upward and downward, thereby increasing the possibility of electrode tremor and bending.

On the other hand, according to the present disclosure in which the micro hole H of the lower bracket 22 provided at a position facing the micro hole H of the upper bracket 21 is the same type of micro hole H as the micro hole H provided in the upper bracket 21, the forces applied to the electrode E at a specific point on the electrode E may offset each other. For example, referring to FIG. 7, the micro hole H provided at the leftmost side of the upper bracket 21 may be the blow hole BH, and the micro hole H of the lower bracket 22 provided at a corresponding position may also be the blow hole BH. In this case, the electrode interposed between the upper bracket 21 and the lower bracket 22 is pressured downward by the upper bracket 21 and at the same time is pressured upward by the lower bracket 22. Therefore, the upward and downward pressures applied to the electrode E offset each other, so the electrode E may not deviate upward or downward. In other words, electrode vibration and electrode bending may be prevented. Likewise, the micro hole H provided at the second position from the left side of the upper bracket 21 may be the a suction hole SH, and the micro hole H of the lower bracket 22 provided at a corresponding position may also be the suction hole SH. In this case, the electrode E interposed between the upper bracket 21 and the lower bracket 22 is pressured upward by the upper bracket 21 and is simultaneously pressured downward by the lower bracket 22. Therefore, the upward and downward pressures applied to the electrode E offset each other, so the electrode E may not deviate upward or downward. In other words, electrode vibration and electrode bending may be prevented.

In another aspect of the present disclosure, the blow hole BH and the suction hole SH may be arranged by turns.

For example, referring to FIG. 6, within one bracket 20, the blow hole BH and the suction hole SH may be arranged by turns. Preferably, the blow hole BH and the suction hole SH may be arranged in a tile pattern. In other words, the micro holes H located on the top, bottom, left, and right sides of the suction hole SH may be the blow holes BH. Likewise, the micro holes H located on the top, bottom, left, and right sides of the blow hole BH may be the suction holes SH.

According to this structure, the same type of micro holes H are not gathered in any specific area, so it is possible to prevent strong pressure from being applied to a specific area. For example, if the blow hole BH is concentrated in a specific area, the pressure pushing the electrode E may increase in that area. As a result, the possibility of electrode tremor or electrode bending increases. Meanwhile, according to the present disclosure, since the suction hole SH and the blow hole BH are arranged by turns, it is possible to prevent large pressure from occurring in any specific area. That is, if the suction hole SH and the blow hole BH are arranged by turns, a minute air flow is formed as shown in FIG. 5, and as a result, a thin air layer may be formed in a direction parallel to the electrode E. Accordingly, it is possible to prevent pressure from being applied to the electrode E in a direction perpendicular to the electrode E at a specific point.

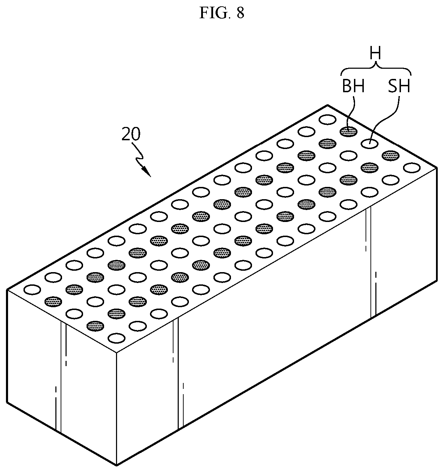

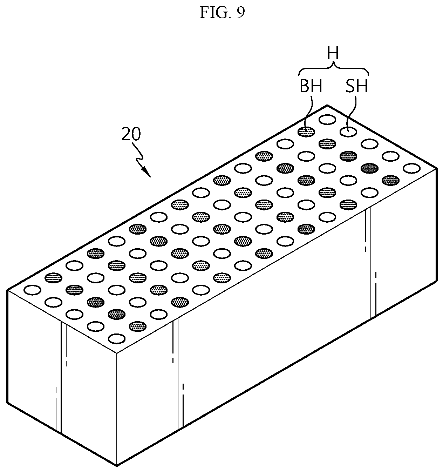

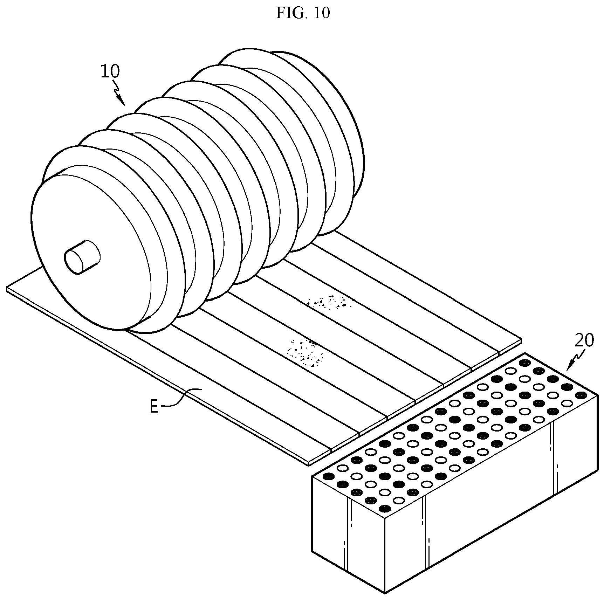

FIG. 8 is a drawing for explaining a bracket 20 according to another embodiment of the present disclosure, and FIG. 9 is a drawing for explaining a bracket 20 according to still another embodiment of the present disclosure. FIG. 10 is a diagram for explaining an electrode manufacturing apparatus 1 including the bracket 20 of FIG. 9.

As another embodiment of the present disclosure, referring to FIGS. 8 and 9, the blow holes BH may be arranged in a straight line, and the suction holes SH may be arranged in a straight line. Here, the arrangement line of the blow holes BH and the arrangement line of the suction holes SH may be arranged by turns.

As an embodiment of the present disclosure, referring to FIG. 8, the arrangement line of the blow holes BH and the arrangement line of the suction holes SH may be perpendicular to the movement direction of the electrode E.

According to this structure, the arrangement line of the suction holes SH and the movement direction of the electrode are perpendicular, so the foreign matter suction effect may be increased. More specifically, because all points in the width direction of the electrode E that pass through the bracket 20 simultaneously pass through the arrangement line of the suction holes SH, it becomes possible to effectively remove foreign matter located on the electrode E.

As another embodiment, referring to FIGS. 9 and 10, the arrangement line of the blow holes BH and the arrangement line of the suction holes SH may be parallel to the movement direction of the electrode E. Preferably, the arrangement line of the suction holes SH may be provided at a position corresponding to the electrode line cut by the knife 11 provided on the slitting roll 10. Referring to FIG. 10, the arrangement line of the suction holes SH may be provided on the line cut by the knife 11.

According to this structure, since the arrangement line of the suction holes SH is provided at a position corresponding to the electrode line cut by the knife 11, suction efficiency may be increased, especially at the cutting point of the electrode E. In other words, there is a high possibility that foreign matter such as electrode powder and foil powder is concentrated at the point cut by the knife 11, and according to the present disclosure, the area where foreign matter is gathered may be suctioned intensively.

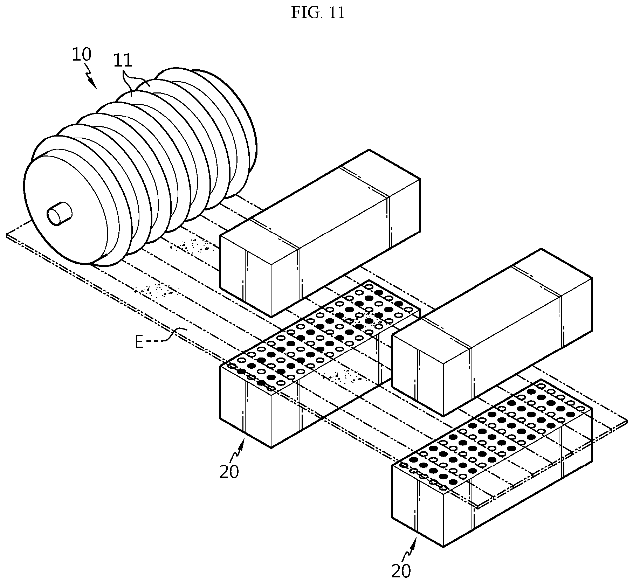

FIG. 11 is a drawing for explaining an electrode manufacturing apparatus 1 according to still another embodiment of the present disclosure.

In another aspect of the present disclosure, the electrode manufacturing apparatus 1 may include a plurality of brackets 20.

The bracket 20 may be provided in plurality along the movement direction of the electrode E. For example, referring to FIG. 11, a first bracket 20 may be provided downstream in the movement direction of the electrode E to be spaced apart from the slitting roll 10 by a predetermined distance. In addition, a second bracket 20 may be provided downstream in the movement direction of the electrode E to be spaced apart from the first bracket 20 by a predetermined distance away.

In still another aspect of the present disclosure, the first bracket 20 and the second bracket 20 may have different arrangement forms of the micro holes H. For example, as shown in FIG. 11, the arrangement form of the micro holes H of the first bracket 20 may be configured so that the arrangement line of the blow holes BH and the arrangement line of the suction holes SH are perpendicular to the movement direction of the electrode E, as shown in FIG. 8. In addition, the arrangement form of the micro holes H of the second bracket 20 may be configured such that the arrangement line of the blow holes BH and the arrangement line of the suction holes SH are parallel to the movement direction of the electrode E, as shown in FIG. 9.

According to this structure, foreign matter that could not be removed with one bracket 20 may be removed by the plurality of brackets 20. In other words, the foreign matter removal efficiency may be further improved. Furthermore, according to the embodiment shown in FIG. 11, since all points in the width direction of the electrode E passing through the bracket 20 simultaneously pass through the arrangement line of the suction holes SH due to the first bracket 20, it is possible to effectively remove foreign matters located on the electrode E, and the area where foreign matter is gathered may be suctioned intensively using the second bracket 20.

Meanwhile, on the contrary, the first bracket 20 may have the micro hole H arrangement shown in FIG. 9, and the second bracket 20 may have the micro hole H arrangement shown in FIG. 8. Alternatively, in another embodiment, the arrangement form of the micro holes H of the first bracket 20 and the arrangement form of the micro holes H of the second bracket 20 may be configured to be the same.

In another aspect of the present disclosure, the bracket 20 may be mounted and secured by the frame 30.

Referring to FIG. 1 again, the bracket 20 may be mounted, for example, on the frame 30 located at one side of the bracket 20. FIG. 1 shows only an example in which the frame 30 is located below the bracket 20, but an embodiment in which the frame 30 is located on the side of the bracket 20 is also possible. In addition, FIG. 1 shows only the frame 30 on which the lower bracket 22 is mounted, but of course, the frame 30 to which the upper bracket 21 is mounted may also be included in the electrode manufacturing apparatus 1 of the present disclosure.

In still another aspect of the present disclosure, the electrode manufacturing apparatus 1 may include a filtration device connected to the air inhaler 40 and capable of filtering and separating foreign matter.

Although not shown in the drawings, the filtration device may filter foreign matter such as electrode powder and foil powder. For example, the filtration device may be installed on the pipe line connected to the micro hole H. Alternatively, the filtration device may be disposed at the upstream of the air inhaler 40. The filtration device may be provided in plurality. The filtration device may separate and discharge foreign matter such as foil powder and electrode powder.

According to this structure, it is possible to prevent foreign matter from penetrating into other devices included in the electrode manufacturing apparatus 1. In particular, according to this structure, it is possible to prevent foreign matter from penetrating into the air inhaler 40. Also, according to a structure in which a plurality of filtration devices are provided, filtration efficiency may be further improved.

According to the various embodiments described above, foreign matter stuck to the electrode E may be effectively removed. Also, because a minute air flow is formed between the electrode E and the bracket 20, electrode tremor may be prevented. In other words, since a minute air layer is formed in the area adjacent to the electrode E, it is possible to prevent the electrode E from sagging or bending. As a result, wrinkles that may appear on the electrode E may be smoothed out. Also, because the bracket 20 is configured to cover the electrode E, according to the present disclosure, foreign matter settled on the surface of the electrode E may be smoothly removed.

Meanwhile, in this specification, the terms indicating directions such as upper and lower are used, but these terms are used just for convenience of description, and it is obvious to those skilled in the art that the terms may change depending on the position of a target or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. An electrode manufacturing apparatus, comprising:
a slitting roll containing a knife for cutting an electrode; and
at least one bracket located downstream in a movement direction of an electrode spaced apart from the slitting roll by a predetermined distance and having a plurality of micro holes provided at a position facing the electrode, the bracket being configured to remove foreign matter generated as a result of cutting the electrode on the slitting roll through the micro holes.

2. The electrode manufacturing apparatus according to claim 1,
wherein the micro holes include:
blow holes configured to discharges air; and
suction holes configured to inhale air.

3. The electrode manufacturing apparatus according to claim 2, further comprising:
an air injector connected to the blow hole through a pipe to discharge air; and
an air inhaler connected to the suction hole through a pipe to inhale air.

4. The electrode manufacturing apparatus according to claim 2, wherein the bracket includes:
an upper bracket located above the electrode; and
a lower bracket located below the electrode.

5. The electrode manufacturing apparatus according to claim 4,
wherein a micro hole of the lower bracket provided at a position facing a micro hole of the upper bracket is the same type of micro hole as the micro hole provided in the upper bracket.

6. The electrode manufacturing apparatus according to claim 2,
wherein the blow holes and the suction holes are arranged by turns.

7. The electrode manufacturing apparatus according to claim 2,
wherein the blow holes and the suction holes are arranged in a tile pattern.

8. The electrode manufacturing apparatus according to claim 2,
wherein the blow holes are arranged in a straight line,
wherein the suction holes are arranged in a straight line, and
wherein the arrangement line of the blow holes and the arrangement line of the suction holes are arranged by turns.

9. The electrode manufacturing apparatus according to claim 8,
wherein the arrangement line of the blow holes and the arrangement line of the suction holes are perpendicular to the movement direction of the electrode.

10. The electrode manufacturing apparatus according to claim 8,
wherein the arrangement line of the blow holes and the arrangement line of the suction holes are parallel to the movement direction of the electrode.

11. The electrode manufacturing apparatus according to claim 8,
wherein the arrangement line of the suction holes is provided at a position corresponding to an electrode line cut by the knife provided to the slitting roll.

12. The electrode manufacturing apparatus according to claim 1,
wherein the electrode manufacturing apparatus includes a plurality of brackets.

13. The electrode manufacturing apparatus according to claim 1,
wherein the electrode manufacturing apparatus includes a frame for mounting and fixing the bracket.

14. The electrode manufacturing apparatus according to claim 3,
wherein the electrode manufacturing apparatus includes a filtration device connected to the air inhaler to filter and separate foreign matter.
